(19) Europäisches Patentamt
European Patent Office
Office européen des brevets

(11) Veröffentlichungsnummer: **0 083 044**
**B1**

(12) # EUROPÄISCHE PATENTSCHRIFT

(45) Veröffentlichungstag der Patentschrift: **16.09.87**

(51) Int. Cl.⁴: **B 01 D 19/04**

(21) Anmeldenummer: **82111768.6**

(22) Anmeldetag: **18.12.82**

(54) **Entschäumerzubereitungen.**

(30) Priorität: **30.12.81 DE 3151957**

(43) Veröffentlichungstag der Anmeldung:
**06.07.83 Patentblatt 83/27**

(45) Bekanntmachung des Hinweises auf die Patenterteilung:
**16.09.87 Patentblatt 87/38**

(84) Benannte Vertragsstaaten:
**BE DE FR GB IT NL**

(56) Entgegenhaltungen:
**EP - A - 0 004 947**
**EP - A - 0 029 947**
**EP - A - 0 031 887**
**EP - A - 0 058 340**
**EP - A - 0 084 145**
**DE - A - 2 625 160**
**GB - A - 2 094 330**
**US - A - 2 862 885**
**US - A - 3 478 075**
**US - A - 3 793 223**

(73) Patentinhaber: **BAYER AG, Konzernverwaltung RP Patentabteilung, D-5090 Leverkusen 1 Bayerwerk (DE)**

(72) Erfinder: **Steinberger, Helmut, Dr., Winand-Rossi-Strasse 36, D-5090 Leverkusen (DE)**
Erfinder: **Alberts, Heinrich, Dr., Schulstrasse 1A, D-5068 Odenthal (DE)**

**EP 0 083 044 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Entschäumerzubereitungen für wässrige Systeme, die zum Schäumen neigen, insbesondere Entschäumer und Antischaummittel, die bereits in geringen Mengen unerwünschte Schaumbildung verhindern oder reduzieren.

Die meisten Prozesse der Textilveredelung vollziehen sich an der Grenzfläche Textilfaser/wässrige Flotte. Daraus ist verständlich, dass Textilhilfsmittel grenzflächenaktive Stoffe sind, die ihre Wirkung an Phasengrenzflächen entfalten.

Eine in der Textilveredlungspraxis unerwünschte Nebenwirkung der grenzflächenaktiven Textilhilfsmittel und eine auch beim Waschprozess nur eingeschränkt geschätzte Eigenschaft ist die Schaumbildung. Zur Bekämpfung dieser störenden Begleiterscheinung ist es notwendig, schaumzerstörende Substanzen der Flotte zuzusetzen.

Die an die Eigenschaften eines Entschäumers zu stellenden Forderungen sind folgende: Sie sollen in Wasser schwer löslich sein, um sich auch in kleinen Konzentrationen an der Phasengrenze aufzuhalten, andererseits müssen die aus dem Entschäumer hergestellten wässrigen Emulsionen eine ausreichende Stabilität besitzen.

Massgebend für die Wirksamkeit ist die Emulsionsstabilität. Erfahrungsgemäss haben sehr stabile Emulsionen nur eine geringe Entschäumerwirkung, während relativ instabil emulgierte Siliconentschäumer ausgezeichnete Effekte liefern. Die erwähnten Probleme treffen nicht nur für Verfahren und Prozesse in der Textilindustrie zu, sondern auch für sehr viele technische Vorgänge wie beispielsweise in der Leimindustrie, der Papierindustrie, bei der Kunststoff-Verarbeitung und in der Petrochemie.

Für viele der geschilderten Prozesse gibt es eine ganze Reihe den speziellen Problemen angepasste Entschäumertypen, insbesondere auch auf Siliconbasis.

Als technisches Problem bleibt jedoch in der überwiegenden Zahl der Fälle das Problem der Entschäumerstabilität bestehen.

Es ist aus diesem Grunde wiederholt versucht worden, Silicone durch chemische Modifikation hydrophiler zu machen und dadurch die Möglichkeit zu erhalten, daraus stabilere Emulsionen herzustellen.

Entschäumer auf Basis von Polyether-Siloxan-Copolymeren erfüllen die Forderung nach verbesserter Emulsionsstabilität. Dieser Vorzug ist jedoch mit gewissen Nachteilen verbunden.

Auch die Synthese von Copolymeren der Silicone mit anderen wasserlöslich machenden organischen Polymeren verläuft in der Regel über mehrere Syntheseschritte, gewöhnlich unter Verwendung von Lösungsmitteln und Hilfsbasen, die nach erfolgter Umsetzung aus dem Reaktionsgut abgetrennt werden müssen.

Die Bildung wasserlöslicher oder wasserdispergierbarer Polymerkörper ist mithin nur über aufwendige und oft mit Ausbeuteverlusten verbundene Synthesen möglich.

Ihre Wirksamkeit ist in der Regel geringer als die reinen Polysiloxan-Entschäumer, was die Wirtschaftlichkeit weiter verringert.

Das Wirkungsverhalten von Polyether-Siloxanentschäumern ist in gewissem Grade temperaturabhängig, d.h. bei niedrigen Temperaturen ist die entschäumende Wirksamkeit dieser Entschäumer relativ geringern als bei höheren Temperaturen.

Aufgabe der vorliegenden Erfindung war es daher, Entschäumersubstanzen zu finden, die die aufgezeigten Nachteile nicht besitzen und die über einfache chemische Syntheseschritte zugänglich sind.

Die erfindungsgemässe Aufgabe wird dadurch gelöst, dass man Substanzen als Entschäumer einsetzt, die durch radikalische Polymerisation von Mischungen aus Organopolysiloxanen, wasserlöslichen Polymeren wie Polyalkylenoxiden oder Polyalkylenoxid-Abkömmlingen und Vinylmonomeren, vorzugsweise Vinylacetat, neuartige Pfropfcopolymere bildet, die über polymerisierte Einheiten aus den eingesetzten Vinylmonomeren querverbrückte Pfropfpolymere aus Organopolysiloxan und dem eingesetzten Polyalkylenoxid oder Polyalkylenoxidabkömmling enthalten.

Solchermassen hergestellte Pfropfpolymere sind, je nach Zusammensetzung, in Wasser löslich oder dispergierbar: bei hohem Silicongehalt lassen sich diese Polymeren durch relativ wenig Emulgatorzusätze leicht in Wasser emulgieren.

Somit ist Gegenstand der Erfindung die Verwendung von Copfropfpolymerisatdispersionen, bestehend aus

| | | |
|---|---|---|
| I. | 5–75 Gew.-% | Wasser |
| II. | 0,5–15 Gew.-% | Emulgier- und/oder Dispergierhilfsmitteln |
| III. | 94,5–10 Gew.-% | Copfropfpolymerisat, erhalten durch Polymerisationsreaktion von |
| 1. | 5 –85 Gew.-% | eines oder mehrere Vinylmonomeren |
| 2. | 0,001–2 Gew.-% | eines oder mehrerer Radikalbinder, |
| | in Gegenwart von | |
| 3. | 8 –90 Gew.-% | Polydiorganosiloxan |
| | 4,999–85 Gew.-% | Polyalkylenoxid und/oder Polyalkylenoxidabkömmlingen |

wobei die Copfropfpolymerisate Anteile von durch Vinylpolymerisatbrücken verknüpfte Polydiorganosiloxan- und Polyalkylenoxid und/oder Polyalkylenoxidabkömmlinge enthalten, und wobei die Summe der Komponenten I–III und III 1 bis III 4 stets 100% beträgt, als Entschäumer.

Ferner ist Gegenstand der Erfindung die Verwendung von Copfropfpolymerisatdispersionen deren Komponente III zusätzlich 0–50 Gew.-% α,%β-ungesättigte Mono- oder Dicarbonsäure enthält.

Vorzugsweise enthalten die erfindungsgemäss eingesetzten Entschäumerzubereitungen Copfropfpolymerisatdispersionen, bestehend aus

I. 30–80 Gew.-% Anteilen aus Organopolysiloxan
II. 10–60 Gew.-% Anteilen aus Polyalkylenoxid und/oder Polyalkylenoxidabkömmlingen
III. 10–60 Gew.-% polymerisierten Einheiten aus Vinylacetat, wobei die Summe der Komponenten I–III stets 100% beträgt.

Die Herstellung der Copfropfpolymerisatdispersionen erfolgt in der Weise, dass Mischungen aus

I. 8–90 Gew.-% Polydiorganosiloxanen
II. 4,999–85 Gew.-% Polyalkylenoxid und/oder Polyalkylenoxidabkömmlingen
III. 5–85 Gew.-% eines oder mehrerer Vinylmonomeren
IV. 0,001– 2 Gew.-% eines oder mehrerer Radikalbildner,

wobei die Summe der Komponenten I bis IV stets 100% bbeträgt, bei Temperaturen zwischen Raumtemperatur und 250 °C einer Polymerisationsreaktion unterzogen werden.

Die Herstellung der Copfropfpolymerisatdispersionen geschieht in der Weise, dass Mischungen aus einem oder mehreren Organopolysiloxanen, Polyalkylenoxid oder Polyalkylenoxidabkömmlingen und einem oder mehreren Vinylmonomerer, vorzugsweise Vinylacetat, in Gegenwart von Radikalbildnern auf eine, die Polymerisation auslösende Reaktionstemperatur gebracht werden. Die Polymerisation kann nach kontinuierlichem oder diskontinuierlichem Verfahren durchgeführt werden.

Die verwendeten Organopolysiloxane sind im wesentlichen linear und können durch die folgenden Formeln dargestellt werden:

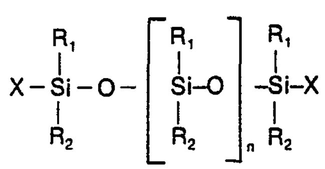

$X = H, CH = CH_2, CH_3,$
$R_1, R_2 = CH_3, C_2H_5, CH = CH_2,$
$n = 10$ bis 5000

Neben Methylgruppen können bis 50 Mol-% Ethyl, Vinyl, Phenyl in den Organopolysiloxankomponenten enthalten sein, bevorzugt werden aber methylsubstituierte Organopolysiloxane eingesetzt. Ferner können dur Hydroxylgruppen terminierte Organopolysiloxane verwendet werden.

Die für die Copfropfpolymerisation eingesetzten Polyalkylenoxide oder Polyalkylenoxidabkömmlinge weisen in der Regel Hydroxylgruppen vorzugsweise 1 bis 8 Hydroxylgruppen auf und werden z.B. durch Polymerisation von Epoxiden wie Ethylenoxid, Propylenoxid, Butylenoxid oder Tetrahydrofuran mit sich selbst, z.B. in Gegenwart von Polymerisationskatalysatoren oder durch Anlagerung dieser Epoxide gegebenenfalls im Gemisch oder nacheinander, an Startkomponenten mit reaktionsfähigen Wasserstoffatomen wie Wasser, Alkohole, Phenol oder Phenolabkömmlinge, Amine oder Amide hergestellt. Vorzugsweise wird Ethylenoxid oder Ethylenoxid und Propylenoxid (als Gemisch oder nacheinander) eingesetzt.

Beispiele für Polyalkylenoxidabkömmlinge sind Polyglycole, die durch Polymerisation von Ethylenoxid mit Butanol oder Butylglycol als Startermolekül hergestellt werden und die allgemeine Formel:

$$C_4H_9O[CH_2CH_2O]_xH$$

besitzen, oder verzweigte Polyglycole, entstanden durch Polymerisation von Ethylenoxid und Propylenoxid in Mischung oder nacheinander, gestartet auf Trimethylolpropan, mit der Formel:

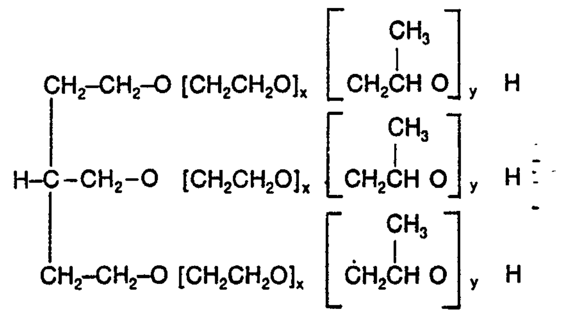

oder auf Alkylphenol gestartete, lineare Polyglycole, entstanden durch Polymerisation von Ethylenoxid, mit der Formel:

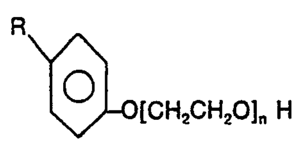

(R = n-Alkyl, i-Alkyl; n = 1 bis 100)

Als Vinylmonomere seien beispielhalft aufgeführt:

Olefine wie Ethylen, Propylen, Isobutylen, Vinylester aliphatischer oder aromatischer Carbonsäuren, vorzugsweise Vinylacetat, Vinylpropionat, α,β-ungesättigte Mono- oder Dicarbonsäure und ihre Derivate, erwähnt seien (Meth) acrylsäure, Methyl(meth)acrylate, Ethyl(meth)acrylat, Propyl- bzw. isopropyl(meth)acrylat, n-Butyl-, iso- oder tert.-Butyl(meth)acrylat, 2-Ethylhexyl(meth)acrylat, (Meth)-Acrylamid, N-Alkyl-substituierte (Meth)-acrylamidderivate, (Meth)Acrylnitril, Maleinsäureanhydrid, Maleinsäureamid, N-Alkyl-Maleinimide, Maleinsäure-halb- oder -diester, Vinylaromaten, wie Styrol, alpha-Methystyrol, 4-Chlorstyrol, Vinylchlorid, Vinylidenchlorid, Vinylidenfluorid, Tetrafluorethylen, Vinylether wie Ethylvinylether oder n-Butylvinylether; aus der Reihe der Allylverbindungen seien angeführt Allylalkohol, Allylacetat, Isobutendiacetat, 2-Methylenpropandiol-1,3, Allylethylcarbonat, Allylphenylcarbonat. Falls die Vernetzung oder Erhöhung der Molekulargewichte der Vinylharzphase gewünscht wird, können Divinylverbindungen oder Diallylverbindungen eingesetzt werden. Erwähnt seien Divinylbenzol, (Meth)Acrylsäureester mehrwertiger Alkohole wie z.B. Ethylenglykoldimethacrylat, Diethylenglyklodiacrylat und Divinylether. Vorzugsweise wird Vinylacetat verwendet.

Die radikalische Polymerisation der Vinylmonomeren kann in an und für sich bekannter Weise mit Hilfe von Radikalbildnern, UV-Strahlen, alpha-, beta- oder gamma-Strahlen oder thermisch ohne weitere Zusätze gestartet werden. Die strahlungsinitiierte Polymerisation wird vorzugsweise in Gegenwart von Sensibilisatoren durchgeführt, vgl. z.B. Jenkins, A. Ledwith, Reactivity, Mechanism and Structure in Polymer Chemistry, John Wiley & Son, London, New York, 1974, S. 465.

Um die radikalische Polymerisation der Vinylmonomeren zu starten, werden Radikalbildner in Mengen zwischen 0,001 bis 2, vorzugsweise 0,02 bis 0,8 Gew.-% bezogen auf die Gesamtmischung aus Organopolysiloxan, Polyester und Vinylmonomere eingesetzt. Als Radikalbildner seien beispielhaft aufgeführt Azo-Initiatoren wie Azo-bisisobuttersäurenitril (AIBN), Azoester, Azo-Iminoester oder Azo-N-Alkylamide, Peroxide wie ditert.-Butylperoxid, Di-cumylperoxid, Di-benzoylperoxid, Perester wie Amylperpivalat, tert.-Butylperpivalat, tert.-Butylperoctoat, t-Butylperbenzoat, tert.-Butylperneodecanoat, Percarbonate wie Cyclohexylpercarbonat oder Bisisopropylpercarbonat oder Hydroperoxide wie z.B. Cumylhydroperoxid, tert.-Butylhydroperoxid.

Geeignete Initiatoren sind ferner Benzpinakol, Benzpinakolderivate oder andere thermisch labile hochsubstituierte Ethanderivate.

Die Polymerisation kann ferner mit Hilfe von Redoxystemen bei tieferen Temperaturen als den rein thermischen Zerfalltemperaturen der Radikalbildner entspricht, gestartet werden.

Als Redox-Initiatoren seien beispielhaft erwähnt Kombinationen aus Peroxiden und Aminen, wie z.B. Benzoylperoxid und Triethylamin, Trialkylborverbindungen und Sauerstoff, Hydroperoxide und Sulfinsäuren, Formaldehyd oder Aldosen oder Kombinationen mit niederwertigen Übergangsmetallsalzen und Schwefeldioxid/Peroxid-Redoxsysteme.

Die Polymerisationsreaktion kann kontinuierlich oder diskontinuierlich, drucklos oder bei Reaktionsdrucken bis z.B. 300 bar, vorzugsweise bis 15 bar, bei Reaktionstemperaturen zwischen −20 °C und +250 °C, vorzugsweise 70 bis 190 °C, durchgeführt werden. Falls gewünscht, kann die Polymerisation auch in Gegenwart von Lösungsmitteln oder Verdünnungsmitteln durchgeführt werden, genannt seien Wasser, Alkohole, wie Methanol, Ethanol, tert.-Butanol, aliphatische oder aromatische Kohlenwasserstoffe, Halogen-Kohlenwasserstoffe wie Chlorbenzol oder fluorierte Verbindungen, Ether wie Dioxan oder Tetrahydrofuran, Ester wie z.B. Essigsäureethylester, vorzugsweise wird die Polymerisation aber lösungsmittelfrei durchgeführt.

Falls gewünscht, kann die Polymerisationsreaktion in Gegenwart von Molekulargewichtsreglern durchgeführt werden. Als Regler seien aufgeführt Marcaptane wie n- oder tert.-Dodecylmercaptan, Thioglykol, Thioglycerin oder Thioessigsäureester, ferner schwefelfreie Molekulargewichtsregler wie Kohlenwasserstoffe; beispielhaft seien genannt Paraffinfraktionen wie z.B. Petrolether, Leicht- oder Waschbenzin, alpha-Olefine, wie z.B. Propylen, Isobutylen, Buten-1, ferner Ketone wie z.B. Aceton, Methylethylketon oder Cyclohexanon, ferner Aldehyde wie z.B. Formaldehyd, Acetaldehyd, Propionaldehyd, Isobutyraldehyd oder Allylverbindungen, wie z.B. Allylalkohol, Allylacetat, Isobutendiacetat oder Allylcarbonate. Als Telogene kommen ferner in Frage Halogenkohlenwasserstoffe wie Methylenchlorid, Tetrachlorethan, Dibromethan usw. Wie zu erwarten lassen sich mit Hilfe derartiger Regler die Viskositäten der Dispersionen steuern.

Die Umsetzung der eingesetzten Monomeren wird vom gewählten Polymerisationsverfahren und den Reaktionsbedingungen bestimmt. Bei der diskontinuierlichen Polymerisationsweise werden möglichst hohe Umsätze angestrebt, so dass mindestens 80% der eingesetzten Monomeren, vorzugsweise aber mehr als 90% umgesetzt werden. Die Entfernung der Restmonomeren erfolgt nach bekannten Verfahren destillativ bei Normaldruck oder unter vermindertem Druck. Die nach der Aufarbeitung in den Dispersionen noch effektiv gefundenen Restmonomergehalte sind vernachlässigbar gering, sie liegen im allgemeinen unter 1000 ppm, vorzugsweise unter 100 ppm.

Die erfindungsgemäss eingesetzten Pfropfcopolymere sind stabile und je nach Zusammensetzung mittel- bis hochviskose, weisse Flüssigkeiten.

In Abhängigkeit von ihrem Gehalt an Siliconkomponenten sind die erfindungsgemäss eingesetzten Pfropfcopolymere in Wasser ohne zusätzliche Hilfsmittel emulgierbar oder durch einfache Massnahmen mit Hilfe von Emulgatoren in wässrige Emulsionen überführbar.

Zur Steigerung der entschäumenden Wirksamkeit wird dem Pfropfcopolymer Siliciumdioxid mit einer BET-Oberfläche von 50 bis 400 $m^2/g$ zugesetzt. Allgemein können von 0,5 bis 15 Gew.-% des Siliciumdioxids, bezogen auf das Pfropfcopolymer, vorhanden sein. Bevorzugt ist eine Siliciumdioxidmenge von 5 bis 10 Gew.-%, bezogen auf das Pfropfcopolymer. Ein solches Siliciumdioxid kann irgendein gefälltes oder in der Gasphase hergestelltes Produkt sein, wie sie allgemein bekannt und im Handel erhältlich sind.

Die Herstellung des Entschäumers erfolgt zweckmässigerweise durch Zusammengeben des oben erwähnten Siliciumdioxids mit dem Pfropfcopolymer, indem man die Mischung beider Komponenten der Einwirkung hoher Scherkräfte unterwirft. Dabei wird nach einigem Rühren vorzugsweise die Temperatur der Mischung für 1 bis 3 Stunden auf 100 bis 150 °C erhöht, um die Dispersion des Siliciumdioxids im Pfropfcopolymer zu erleichtern. Die erhaltene Mischung kann man

durch einen Homogenisator schicken, um die Teilchengrösse des in dem Pfropfcopolymer dispergierten Siliciumdioxid-Füllstoffes zu vermindern und die Dispersion des Füllstoffes in der Polymerflüssigkeit zu unterstützen.

Nach dem Einmischen des Siliciumdioxids während vorzugsweise 2 bis 6 Stunden und den oben genannten Temperaturen wird die Mischung auf Raumtemperatur unter Rühren abgekühlt und kann als Schaumverhütungsmittel eingesetzt werden.

Es ist aber auch möglich, das Mittel in Form einer Emulsion zuzubereiten, insbesondere in Form einer Öl-in-Wasser-Emulsion. Der Einsatz solcher Emulsionen gestattet die leichtere Dispergierung des Schaumverhütungsmittels der vorliegenden Erfindung in wässrigen Schaumsystemen.

Als Emulsionsmittel können in dem geschäumten System, zu dem das Schaumverhütungsmittel hinzugegeben werden soll, einsetzbare Emulsionsmittel verwendet werden. Solche Emulsionsmittel sind konventionelle Emulsionsmittel, wie Polyoxyethylensorbitanmonostearat, Sorbitanmonostearat, Polyoxyethylenstearat sowie deren Mischungen. Kommt das Schaumverhütungsmittel in Berührung mit Nahrungsmitteln, dann ist eine Mischung aus Sorbitanmonostearat und Polyoxyethylenstearat als Emulsionsmittel bevorzugt. Es können jedoch auch andere übliche Ingredenzien hinzugegeben werden, um das Schaumverhütungsmittel nach der vorliegenden Erfindung zu emulgieren. So kann z.B. Sorbinsäure in einer Konzentration von 0,01 bis 0,1 Gew.-% von der Zusammensetzung als Bakterizid hinzugegeben werden.

Bei der Herstellung der Emulsion und wie in der US-PS 4 005 044 offenbart, wird das Emulsionsmittel vorzugsweise in Wasser gelöst, das Diorganopolysiloxan zusammen mit dem Siliconharz in der Lösung des Emulsionsmittels in Wasser dispergiert, dann ein Silazan-behandelter Siliciumdioxyd-Füllstoff in die Dispersion eingemischt und das erhaltene Gemisch gemahlen. Obwohl ein solches Vorgehen bevorzugt ist, da es die Dispersion des Füllstoffes unter rascher Bildung einer stabilen Emulsion beschleunigt, ist die vorliegende Erfindung nicht auf ein solches Mischverfahren beschränkt. Das genannte Verfahren nach der US-PS 4 005 044 ist einfach als das bevorzugte Verfahren zum Herstellen der Emulsion angegeben.

Ein allgemeines Verfahren zum Herstellen der Emulsion besteht in der Zugabe der Emulsionsmittel, wie Sorbitanmonostearat und Oxyethylenstearat zu Wasser und Erhitzen der Mischung auf Temperaturen von 60 bis 100 °C unter Rühren mit hoher Scherwirkung. Zu dieser Mischung kann man dann die gewünschte Menge des erfindungsgemässen Schaumverhütungsmittels hinzugeben, das erhalten wurde durch Einarbeiten des Siliciumdioxid-Füllstoffes unter Rühren mit hoher Scherwirkung in das erfindungsgemässe Pfropfcopolymer.

Nachdem das Schaumverhütungsmittel bei einer Temperatur von 40 bis 100 °C hinzugegeben worden ist, setzt man das Vermischen für eine Zeit von 1 bis 5 Stunden fort, bis die Mischung gleichmässig ist. Dann kann man weiteres Wasser hinzugeben, um die Emulsion bis zu dem gewünschten Grade zuverdünnen, während man weiter auf eine Temperatur von 40 bis 100 °C erhitzt und das Rühren mit hoher Scherwirkung fortsetzt. Dann kühlt man das Ganze etwas ab und behandelt es für die Dauer von 1 bis 4 Stunden in einer Koloidmühle, bis die Emulsion gleichförmig ist. Man erhält dabei eine stabile Emulsion und diese kann als Schaumverhütungsmittel mit guter Dipsergierbarkeit eingesetzt werden. Dieses in den Beispielen benutzte Verfahren ist hier nur als beispielhaft angegeben. Ungeachtet, welches Verfahren verwendet wird, sollte es den jeweiligen Erfordernissen der spezifischen Anwendung angepasst sein.

Allgemein kann irgendein Verfahren zum Vermischen der Bestandteile benutzt werden, mit dem man eine ausreichend stabile Emulsion innerhalb kurzer Zeit erhält.

Es ist mit Bezug auf die gebildete Emulsion darauf hinzuweisen, dass bei einer stabilen Emulsion Schwierigkeiten bei der Dispergierung der Emulsion in dem geschäumten System auftreten werden, was dazu führt, dass sie nicht so wirksam sein wird. Ist die Emulsion dagegen zu instabil, dann hat sie nur eine kurze Lagerbeständigkeit. Bevorzugt sind Emulsionen mit einer Lagerbeständigkeit von 6 Monaten bis zu einem Jahr.

Die im folgenden angegebenen Beispiele sollen die Erfindung erläutern, ohne sie in irgendeiner Hinsicht zu beschränken.

Herstellung der Ausgangssubstanzen:

Die Herstellung der Polydiorganosiloxane erfolgt in an sich bekannter Weise (vgl. W. Noll, «Chemie und Technologie der Silicone», Verlag Chemie, Weinheim/Bergstrasse, 2. Auflage, 1968, Kap. 5, S. 162 ff).

Die in den Beispielen aufgeführten Siloxane sind wie folgt gekennzeichnet:

| Polysiloxan | Beschreibung | Viskosität m Pas 25 °C |
|---|---|---|
| 1 | Trimethylsilylgruppenterminiert | 1000 |
| 2 | Hydroxylgruppenterminiert | 10000 |

Die in den Beispielen aufgeführten Polyalkylenoxidabkömmlinge weisen folgende Kenndaten auf:

| Polyalkylenoxid | Zusammensetzung | physikal. Kenndaten |
|---|---|---|
| A | Polyethylenglykol | Fp.: 58–60 °C MG. ca. 1500 |
| B | Sorbitantrioleat | |
| C | Oleylalkohol-20-ethoxylat | |
| D | Oleylalkohol-50-ethoxylat | |

Beispiel 1 und 2

In einem 6 l-Rührkessel werden unter Stickstoff 1000 g Polyalkylenoxid A und 1600 g Polysiloxan Nr. 2 vorgelegt. Man erwärmt unter Rühren auf 110 °C und gibt sodann die Lösung innerhalb von 2 Std. bei 110 °C Innentemperatur hinzu:

| Lösung Bei-spiel-Nr. | Vinyl-acetat | Poly-siloxan Nr. 2 | tert.-Butyl-perpi-valat | Azo-diiso butter-säuredi-ethylester |
|---|---|---|---|---|
| 1 | 1000 | 400 | 4,5 | – |
| 2 | 1000 | – | – | 6,0 |

Anschliessend wird 1 Std. bei 110 °C nachgerührt und die flüchtigen Anteile sodann im Vakuum abdestilliert. Der Vinylacetatumsatz beträgt bei Beispiel 1: 94,5% und bei Beispiel 2: 92,8%. Nach dem Abkühlen auf Raumtemperatur sind die Produkte fest.

Beispiel 3

In einem 6 l-Rührkessel werden unter Stickstoff 1000 g Polyalkylenoxid A, 1600 g Polysiloxan Nr. 1 auf 110 °C unter Rühren erwärmt. Dann wird innerhalb von 2 Std. eine Lösung aus 1000 g Vinylacetat, 400 g Polysiloxan Nr. 1 und 4,5 g tert.-Butylperpivalat hinzugegeben und die Innentemperatur konstant bei 110 °C gehalten. Anschliessend wird 1 Std. bei 110 °C nachgerührt und sodann die flüchtigen Anteile in Vakuum abgezogen. Der Vinylacetatumsatz beträgt 92,1%. Nach dem Abkühlen auf Raumtemperatur hat die Dispersion eine Viskosität von 8000 mPas.

Beispiel 4

In einem 2 l-Rührkessel werden unter Stickstoff 450 g Polysiloxan Nr. 1, je 225 g Polyalkylenoxid B und C auf 110 °C erwärmt. Dann wird bei einer Innentemperatur von 110 °C eine Lösung aus 300 g Vinylacetat, 150 g Polysiloxan Nr. 1 und 1,7 g tert.-Butylperpivalat innerhalb von 2 Std. hinzugegeben. Anschliessend wird 1 Std. nachgerührt und die flüchtigen Anteile im Vakuum abgezogen. Der Vinylacetatumsatz beträgt 91% und die Viskosität der auf Raumtemperatur abgekühlten Dispersion wird mit 46 500 mPas gemessen.

Beispiel 5

In einem 2 l-Rührkessel werden unter Stickstoff 300 g Polysiloxan Nr. 2 und 300 g Polyalkylenoxid D auf 110 °C erwärmt. Dann wird eine Lösung aus 200 g Vinylacetat, 100 g Polysiloxan 2 und 1,2 g tert.-Butylperpivalat innerhalb von 2 Std. hinzugegeben und 2 Std. bei 110 °C nachgerührt. Die flüchtigen Anteile werden im Vakuum abdestilliert. Der Vinylacetatumsatz beträgt 93,6%. Das Reaktionsprodukt ist bei Raumtemperatur fest.

Beispiel 6

In einem 40 l-Rührkessel werden 11 880 g Polydimethylsiloxan (Polysiloxan A) und 6000 g Polyethylenoxid (Molgewicht 6000) vorgelegt. Der Kessel wird evakuiert und mit Stickstoff gespült. Dann wird auf 110 °C aufgeheizt und eine Lösung aus 9240 g Vinylacetat und 67,5 g tert.-Butylperpivalat innerhalb von 3 Stunden hinzugegeben. Nach zweistündigem Nachrühren bei 110 °C werden die flüchtigen Anteile destillativ entfernt. Das Produkt weist bei 25 °C eine Viskosität von 22 Pas auf und enthält 32,4% polymerisierte Einheiten aus Polyethylenoxid und 44,9% Polysiloxananteil.

Beispiel 7

In einem Mischrührwerk werden 1,88 kg eines Pfropfcopolymers des Beispiels 6 mit einer Viskosität von 22 Pas und 0,12 kg pyrogen in der Gasphase erzeugtes, hydrophobiertes Siliciumdioxid mit einer BET-Oberfläche von 200 $m^2/g$ innerhalb von 30 Minuten miteinander vermischt. Es wird eine weiche Paste erhalten, die auch nach Lagerung von mehr als 4 Wochen keine Veränderung zeigt.

Beispiel 8

In einer Topfmühle von 4 l Inhalt werden 1,8 kg eines Pfropfcopolymers des Beispiels 3 mit einer Viskosität von 8000 mPas mit 0,2 kg einer gefällten, hydrophobierten Kieselsäure mit einer BET-Oberfläche von 120 $m^2/kg$ während 2 Stunden miteinander vermahlen und anschliessend unter Anlegen eines Vakuums von 53 mbar auf 120 °C erwärmt. Nach Abkühlen auf Raumtemperatur wird eine Flüssigkeit erhalten, die auch nach Lagerung von mehr als 4 Wochen keine Veränderung zeigt.

Beispiel 9

Zu 35,0 kg einer Entschäumungsmittelzubereitung gemäss Beispiel 7 werden 2 kg eines Sorbitantrioleates gegeben und eingemischt. Dann werden nach und nach innerhalb 30 Minuten 63,0 kg entionisiertes Wasser unter Rühren zugesetzt und die erhaltene Emulsion eine weitere Stunde nach Zugabe des Wassers gerührt. Anschliessend wird einmal bei einem Druck von 200 bar mittels einer Hochdruckhomogenisiermaschine homogenisiert. Man erhält eine weisse, niedrigviskose Emulsion.

Beispiel 10

Zu 40,0 kg einer Entschäumungsmittelzubereitung gemäss Beispiel 8 werden 1 kg eines Sorbitantrioleates und 1 kg eines Oleyl-50-ethoxylates zugesetzt. Die Mischung wird unter Rühren auf 70 °C erwärmt und anschliessend werden 58,0 kg entionisiertes Wasser von Raumtemperatur innerhalb 45 Minuten unter Rühren zugegeben. Die erhaltene Emuslion wird nach Zugabe des Wassers für eine weitere Stunde gerührt und anschliessend mittels einer Hochdruckhomogenisiermaschine bei einem Druck von 200 bar in einem Durchgang homogenisiert. Man erhält eine mittelviskose Emulsion.

Beispiel 11 (Vergleichsversuch)

Zu Vergleichszwecken wird eine Entschäumeremulsion nach dem Stande der Technik wie folgt hergestellt. Ein Entschäumercompound wird

durch intensives Mischen von 92 Gew.-% eines Polydimethylsiloxans der Viskosität 1400 mPas bei 25 °C und 6 Gew.-% eines durch Flammenhydrolyse erzeugten Siliciumdioxides mit einer BET-Oberfläche von 380 $m^2/g$ sowie 2 Gew.-% eines kurzkettigen durch Hydroxylgruppen terminierten Dimethylpolysiloxans hergestellt. 35 Gew.-% Entschäumercompound werden in einem Kolben vorgelegt und auf 80 °C erwärmt. Dazu werden 4,5 Gew.-% eines mit 20 Mol Ethylenoxid umgesetzten Oleylalkohols und 5,5 Gew.-% eines mit 6 Mol Ethylenoxid umgesetzten p-iso-Nonylphenols gegeben. Zu dieser Mischung gibt man 55 Gew.-% Wasser im Verlaufe von 60 Minuten und rührt weitere 15 Minuten nach. Schliesslich wird die erhaltene Emulsion 2 mal bei 200 bar mittels einer Hochdruckhomogenisiermaschine homogenisiert.

Beispiel 12 (Vergleichsversuch)

Dieses Beispiel belegt den Eigenschaftsunterschied einer reinen Mischung der im Copfropfpolymerisat enthaltenen Bestandteile in gleicher prozentualer Zusammensetzung gemäss Beispiel 6. Hierzu werden 449 g Polysiloxan A, 227 g Polyethylenoxid (Molgewicht 6000), 324 g Polyvinylacetat (Molgewicht ca. 2200) gemischt und unter Rühren während 2 Stunden auf 120 °C erhitzt. Nach Abkühlen der Mischung wurde das Gemisch gemäss Beispiel 7 mit einem hydrophobierten Siliciumdioxid gemischt und das erhaltene Gemisch anschliessend gemäss Beispiel 9 in eine wässrige Emulsion überführt.

Die nach den oben beschriebenen Entschäumerzubereitungen lassen sich auf folgende Weise prüfen:

Schaumhemmende Wirkung

Die schaumhemmende Wirkung der Entschäumerzubereitungen lässt sich auf folgende Weise prüfen:

Man stellt sich eine Tensidlösung eines handelsüblichen Alkylsulfonates her, die 5 g/l Alkylsulfonat enthält. 0,1 ml einer 10 Gew.-%igen Entschäumerverdünnung (0,00288 g Silicon/100 ml Alkylsulfonatlösung) bzw. 0,5 und 0,25 ml einer 1 Gew.-%igen Entschäumerverdünnung (0,0014 g bzw. 0,00072 g Silicon/100 ml Alkylsulfonatlösung) werden in ein handelsübliches graduiertes Schaummessgefäss (nach Schlachter-Dirkes) pipettiert und mit 100 ml Alkylsulfonatlösung, die 5 g/l Alkylsulfonat enthält, aufgefüllt. Innerhalb von 35 Sekunden wird die vorgelegte Lösung 50 mal mit einem pneumatisch angetriebenen Schlaggerät geschlagen. Der auf einem Metallstab von 12 mm Durchmesser aufgeschraubte Stempel des Schlaggerätes besteht aus Silicongummi eines Durchmessers von 42 mm und einer Dicke von 3 mm. In äquidistanten Abständen befinden sich 10 Löcher von 5 mm Durchmesser.

Bewertet wird die Schaumhöhe sofort nach Beendigung der Schlagzeit sowie die Zerfallzeit des Schaumes bis zum Erreichen der 100 ml-Marke (Höhe des Flüssigkeitsniveaus). Die erhaltenen Werte werden verglichen.

Wasserverdünnbarkeit

Die Wasserverdünnbarkeit der Entschäumerzubereitungen wird geprüft, indem eine 10 Gew.-%ige wässrige Verdünnung der Entschäumerzubereitungen angesetzt wird. Hierbei werden Wasser und Entschäumer durch kurzes Umrühren in einem Becherglas vermischt. Es muss sich eine feinteilige Emulsion bilden, die nach 20 minütigem Stehenlassen keine fettartig-klumpigen Abscheidungen zeigt. Eventuell auftretende Aufrahmungen sollen sich durch Umschütteln wieder verteilen lassen.

Die Ergebnisse der Prüfung sind in Tabelle 1 wiedergegeben:

Tabelle 1:
Schaumhemmende Wirkung und Wasserverdünnbarkeit

| Beispiel | Wasserverdünnbarkeit | Entschäumende Wirkung<br>Schaumhöhe (ml) / Schaumzerfallzeit (s)<br>0,003 g | <br><br>0,0015 g | <br><br>0,001 g |
|---|---|---|---|---|
| 9 | gut, keine Abscheidungen | 60/3 | 100/ 9 | 200/ 40 |
| 10 | gut, keine Abscheidungen | 50/3 | 100/15 | 100/ 45 |
| 11 | schlechter als bei 9 und 10<br>feine Teilchen scheiden sich ab | 60/5 | 100/35 | 200/100 |
| 12 | sehr schlecht, starke Abscheidung fettartiger Agglomerate | Durch Klumpenbildung keine Vermessung möglich | | |

**Patentansprüche**

1. Verwendung von Copfropfpolymerisatdispersionen, bestehend aus

I. 5–75 Gew.-% Wasser
II. 0,5–15 Gew.-% Emulgier- und/oder Dispergierhilfsmitteln
III. 94,5–10 Gew.-% Copfropfpolymerisat, erhalten durch Polymerisationsreaktion von
1. 5 –85 Gew.-% eines oder mehrerer Vinylmonomeren
2. 0,001–2 Gew.-% eines oder mehrerer Radikalbildner,

in Gegenwart von

| | | |
|---|---|---|
| 3. | 8 –90 Gew.-% | Polydiorganosiloxan |
| 4. | 4,999–85 Gew.-% | Polylakylenoxid und/oder Polyalkylenoxidabkömmlingen |

wobei die Copfropfpolymerisate Anteile von durch Vinylpolymerisatbrücken verknüpfte Polydiorganosiloxan- und Polyalkylenoxid und/oder Polyalkylenoxidabkömmlinge enthalten, und wobei die Summe der Komponenten I–III und III 1 bis III 4 stets 100% beträgt, als Entschäumer.

2. Verwendung von Copfropfpolymerisatdispersion gemäss Anspruch 1, dadurch gekennzeichnet, dass die Komponente III zusätzlich 0–50 Gew.-% α,β-ungesättigte Mono- oder Dicarbonsäure enthält.

**Claims**

1. Use of graft copolymer dispersions consisting of

| | | |
|---|---|---|
| I. | 5–75% | by weight of water, |
| II. | 0,5–15% | by weight of emulsifying and/or dispersing auxiliaries, |
| III. | 94,5–10% | by weight of a graft copolymer obtained by a polymerisation reaction of |
| 1. | 5 –85% | by weight of one or more vinyl monomeres, |
| 2. | 0,001– 2% | by weight of one or more radical formers, in the presence of |
| 3. | 8 –90% | by weight of polydiorganosiloxane and |
| 4. | 4,999–85% | by weight of polyalkylene oxide and/or polyalkylene oxide derivatives, |

the graft copolymers containing quantities of polydiorganosiloxane and polylalkylene oxide and/or polyalkylene oxide derivatives linked via vinyl polymerymer bridges, and the sum of components I–III and III 1 to III 4 always being 100%, as defoaming agents.

2. Use of the graft copolymer dispersion according to Claim 1, characterised in that component III additionally contains 0–50% by weight of α,β-unsaturated mono- or diacarboxylic acid.

**Revendications**

1. Utilisation de dispersions de copolymères greffés comprenant:

| | | |
|---|---|---|
| I. | 5–75% | en poids d'eau |
| II. | 0,5–15% | en poids d'agents émulsionnants et/ou dispersants |
| III. | 94,5–10% | en poids d'un copolymère greffé obtenu par une réaction de polymérisation de: |
| 1. | 5 –85% | en poids d'un ou de plusieurs monomères vinyliques |
| 2. | 0,001– 2% | en poids d'un ou de plusieurs formateurs de radicaux, |
| | en présence de | |
| 3. | 8 –90% | en poids d'un polydiorganosiloxane |
| 4. | 4,999–85% | en poids d'un oxyde de polyalkylène et/ou de dérivés d'oxyde de polyalkylène, |

les copolymères greffés contenant des fractions de polydiorganosiloxane et d'oxyde de polyalkylène et/ou de dérivés d'oxide de polyalkylène reliés par des ponts de polymères vinyliques, tandis que la somme des composants I–III et III 1 à III 4 s'élève constamment à 100%, comme inhibiteurs de mousse.

2. Utilisation d'une dispersion de copolymère greffé selon la revendication 1, caractérisée en ce que le composant III contient, en outre, 0–50% en poids d'acide mono- ou dicarboxylique α,β-insaturé.